# EUROPEAN PATENT SPECIFICATION

(11) **EP 1 898 663 B1**
(45) Date of publication and mention of the grant of the patent: **02.11.2011**
(21) Application number: 06300937.7
(22) Date of filing: 08.09.2006
(51) Int. Cl.: H04Q 11/04, H04B 3/02

(54) **A filter device for passing telephony signals**
Filtergerät zum Übertragen von Telefonsignalen
Dispositif de filtrage pour faire passer de signaux téléphoniques

(43) Date of publication of application: 12.03.2008
(73) Proprietor: Alcatel Lucent, 75008 Paris (FR)
(72) Inventor: Orr, Bruce Francis, New South Wales 2093 (AU)
(74) Representative: Brose, Gerhard

(56) References cited:
- EP-A- 1 418 790
- WO-A-03/045043

## Description

### Technical Field

This invention relates to the field of filter devices passing telephony signals present in communications traffic. The invention may have particular application to the field of digital subscriber line transmission systems overlayed on lines carrying telephony traffic.

### Background

Digital subscriber line (DSL) transmission systems form one of the major means of broadband service delivery in use worldwide. One of the most widely used DSL transmission systems is asymmetric digital subscriber line (ADSL).

DSL services are currently generally overlayed on a telephone line that also carries a plain old telephone service (POTS). The telephone line is usually a twisted copper pair. For the DSL and POTS services to co-exist on the same line without mutual interference requires the use of splitters (which operate as filters) at both the customer end and the head end of the copper pair cable. Normally the head end DSL equipment is located in central offices (exchange buildings), but can also be located elsewhere, for example in remote cabinets.

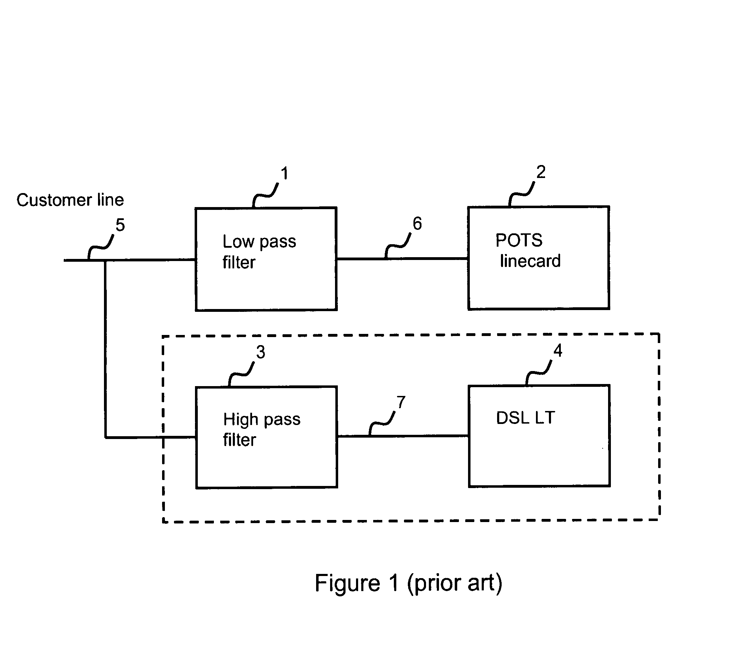

Splitters for separating DSL and POTS signals in central office applications are well known. Referring to Figure 1, generally these consist of a low pass filter (LPF) 1 connected to a POTS line card 2, and a high pass filter (HPF) 3 connected to a DSL line termination (LT) 4. The POTS line card 2 is the telephone exchange interface and the DSL LT 4 is the interface to a broadband network.

The LPF 1 and HPF 3 are connected to the customer line 5, which is the telephone line. The LPF 1 passes low frequency telephone signals to the POTS line card 2 and blocks the higher frequency DSL signals. The HPF 3 passes the high frequency DSL signals to the DSL LT 4 and blocks the lower frequency telephone signals.

The connections between the devices shown in Figure 1 are two wire pairs (twisted copper pair), but are shown as single lines in Figure 1 for clarity and simplicity of illustration. The HPF 3 and DSL LT 4 are typically integrated into one unit (represented by the dotted line in Figure 1). While Figure 1 shows an arrangement for a single line, often multiple lines are combined in physical LPF 1, HPF 3, DSL LT 4 and POTS line card 2 units in practice. Typically multiple line units have between twenty-four and forty-eight lines.

The POTS signals occupy the frequency band 0-4kHz (including the DC line feed), while the DSL signals typically occupy the band above very approximately 30kHz. The upper frequency limit for DSL signals depends on the type of DSL. For example the upper limit is 1.1 MHz for ADSL, 2.2MHz for ADSL2+ and 12MHz for VDSL.

The LPF 1 has the following additional requirements:
1. to attenuate high frequency components of POTS transients (eg. transient signals resulting from ringing or dialling, or from going "off-hook") and thereby prevent errors from occurring on the ADSL signal.
2. to attenuate ADSL signals from the line reaching the POTS line card 2, thereby preventing significant noise and distortion of the voice signal.
3. to present a high impedance to the ADSL signal so as not to load the signal.

In many countries a particular complex impedance is specified in the relevant regulations for the POTS voice signal so as to better match the line impedance. Accordingly, the LPF 1 is designed to present a complex impedance to the customer line 5.

A commonly known solution for providing such particular complex impedance is given in EP 1418790 A2. That is where the invention starts.

The particular complex impendence required may vary between countries. A problem for suppliers of splitters is therefore designing and manufacturing appropriate splitters for each country, and ensuring that only the correct splitters are supplied.

There is also ongoing need for devices that adequately split communication signals, and which can be provided in a cost and space efficient manner. In particular, there is an ongoing need to provide adequate low-pass filtering of POTS signals.

It is an object of the present invention to overcome one or more problems in known filter devices for passing telephony signals, to satisfy one or more needs relating to filter devices for passing telephony signals, or at least to provide the public with a useful alternative.

Throughout the specification the term "comprise" and variations on this term including "comprising" and "comprises" are to be understood to imply the inclusion of a feature, integer, step or element, and not to exclude other features, integers, steps or elements.

### Summary of the invention

According to a first aspect of the present invention, there is provided a filter device for passing telephony signals, the filter device comprising an input port for receiving communications traffic containing telephony signals in a lower frequency band and other signals in a higher frequency band and a low pass filter coupled to the input port characterised in that the filter device further comprises means to synthesize a complex impedance coupled to the low pass filter, said means creating a complex impedance at the input port, and in that the low pass filter is a real impedance filter.

Preferably, the low pass filter is a third order filter.

Preferably, the low pass filter has two series connected double wound inductors and a shunt capacitor between the two inductors.

In an alternative embodiment the low pass filter is a fourth order filter having two series connected double wound inductors, a shunt capacitor between the two inductors and a capacitor connected in parallel between the low pass filter and the means to synthesize a complex impedance.

Preferably, the low pass filter further has a capacitor across each of the two windings of one of the inductors.

Preferably, the means to synthesize a complex impedance is implemented by a digital signal processor that is configurable to synthesize different complex impedances.

Preferably, the means to synthesize a complex impedance comprises part of a POTS line card.

Preferably, the filter device further comprises a high pass filter that passes signals in said higher frequency band, the high pass filter coupled to the input port and having an output port for high pass filtered signals received from the input port. Preferably, the combination of the low pass filter device, high pass filter and any components between the low pass filter and means to synthesize a complex impedance implements a fifth order low pass filter.

Preferably, the low pass filter and the means to synthesize a complex impedance are discrete physical devices and the low pass filter is a pluggable device.

Preferably, the low pass filter is implemented on a printed circuit board assembly, the printed circuit board assembly further including means for passing signals received at the input port of the filter device to an output port without passing through the low pass filter.

According to a second aspect of the invention, there is provided a method of producing a filter device for passing telephony signals, the method comprising:
providing a means to synthesize a complex impedance having an input port and an output port and operable to communicate telephony signals received at its input port to its output port; and
providing a real impedance low pass filter having an input port and an output port, the real impedance low pass filter having a transfer function between its output port and input port that provides a non-zero complex impedance at the input port due when the input port of the means to synthesize a complex impedance is coupled to the output port of the real impedance low pass filter; and
coupling the input port of the means to synthesize a complex impedance to the output port of the low pass filter.

Preferably, providing a means to synthesize a complex impedance comprises providing a device that receives a first signal at its input port, transforms the first signal by a transform function to produce a second signal and synthesizes the complex impedance by providing the second signal as a feedback signal to the input port.

Preferably, providing a means to synthesize a complex impedance comprises programming a digital signal processor on a POTS line card to synthesize the complex impedance.

Further aspects of the present invention, which should be considered in all its novel aspects, will become apparent from the following description, given by way of example of the most preferred embodiments and with reference to the accompanying drawings.

### Brief Description of the Drawings

Figure 1 (prior art): shows a block diagram of the standard components and connections of a central office splitter;
Figure 2: shows diagrammatically a filter device of the present invention;
Figure 3: shows an exemplary circuit diagram of a filter device of the present invention; and
Figure 4: shows a perspective view of a splitter device including a filter device of the present invention.

### Modes for carrying out the invention

Throughout this specification, unless the context clearly requires otherwise, like reference numerals refer to like components.

The present invention relates to splitter devices and methods and may have particular application to splitters and methods of splitting communications signals for head end digital subscriber line equipment. For example, the invention may have particular use in DSL access multiplexers (DSLAMs) and in remote cabinet applications.

A splitter device of the present invention includes a real impedance low pass filter. The required complex impedance is then synthesized at the line using complex impedance synthesis, which is available in some existing types of POTS line card. This complex impedance synthesis typically uses a digital signal processor (DSP), which may be programmed by software to provide the required impedance.

Even though the filter has a real impedance (for example a 600 ohms resistive impedance), by providing a filter that exhibits a degree of impedance transparency so that the input impedance depends not only on the filter impedance but also on the termination impedance, it is possible to synthesize the required complex impedance at the line by synthesizing another complex impedance at the port of the POTS line card.

By changing the impedance synthesis coefficients in the POTS line card, different complex impedances can be produced without change to the hardware of the real impedance filter. Different complex impedances may be required for different markets. This may provide a substantial advantage over conventional complex impedance filters, where different hardware variants are needed for different markets. Efficiencies of scale may be able to be achieved over systems that require different hardware variants.

In the most preferred embodiment, the real impedance filter is a 3^{rd} order modified elliptic design. The filter is also preferably physically implemented in a compact plug-in form ("mini-splitter"), which is separate from the POTS line card, although the real impedance filter can instead be integrated into the POTS line card if required.

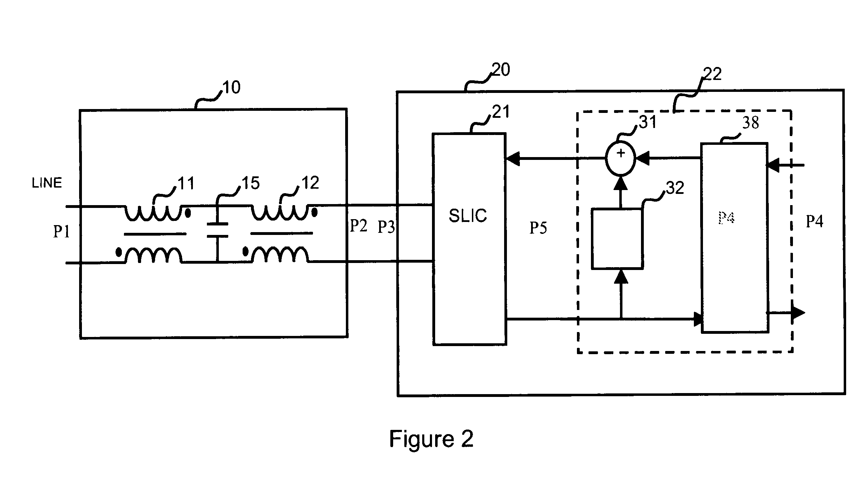

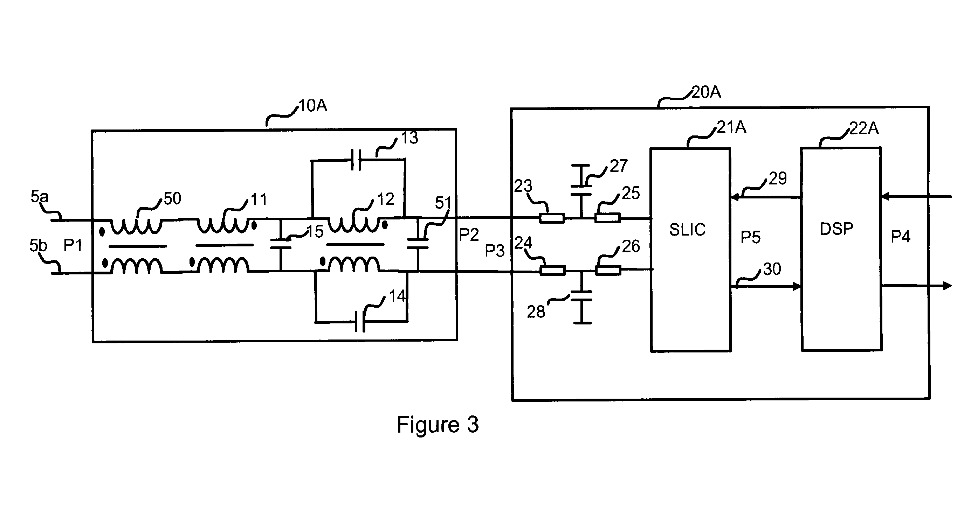

Figure 2 shows a high level circuit diagram of an embodiment of the present invention. The low pass filter (LPF) 10 has two series connected double winding inductors 11, 12 with a shunt capacitor 15 provided between the two inductors 11, 12. The LPF 10 is therefore a 3^{rd} order filter. Preferably capacitors 13, 14 (see Figure 3) are also provided across both windings of the inductor 11 or the inductor 12 to increase the rate of roll-off and convert the filter to an elliptic type. Those skilled in the relevant arts will appreciate that alternative designs of low pass filter may be used without departing from the scope of the present invention.

The LPF 10 also includes ports P1 and P2 for connection to the customer line 5 and plain old telephone service (POTS) line card 20 respectively. The port P2 is connected to a port P3 of the POTS line card 20. The POTS line card 20 is connected to a POTS network (not shown) through port P4.

The combination of the LPF 10 with the capacitance in the POTS line card 20 and capacitance of the HPF 3 creates an effective 5^{th} order filter. Although higher order filters may be used, the cost of this is an increased size of LPF and an increased manufacturing cost. If a lower order filter is used, then the stopband rejection may be insufficient, requiring further measures to accommodate the unwanted signals passed by the LPF 10. Therefore, the most preferred embodiment is a 3^{rd} order LPF 10 that in use implements an effective 5^{th} order filter.

The POTS line card 20 may include a subscriber line interface circuit (SLIC) 21 that provides a DC feed to the customer line 5 and to port P4. The POTS line card 20 also includes a voice frequency send (VF OUT) terminal and a voice frequency receive (VF IN) terminal, both of which are connected to the POTS network.

The SLIC 21 is connected to an impedance synthesizer 22 that feeds back some of the SLIC VF OUT signals onto the SLIC VF IN signals through a predefined transfer function 32 and an adder 31. The transfer function 32 is selected to synthesize the target complex impedance at the line port P1. A different (intermediate) impedance is generated at port P3, which is changed by the transfer function of the LPF 10 to the target complex impedance at the port P1.

The impedance generated at P3 = Z_{SLIC}/(1-AH), where Z_{SLIC} is the intrinsic SLIC impedance, A is the total gain in the feedback path and H is a complex transfer function. The required transfer function 32 to achieve the target complex impedance at the line can be computed using the Vineticos software tool available from Infineon Technologies AG, or otherwise.

The impedance synthesis means is advantageously implemented using a digital signal processor (DSP), which may be part of the existing digital signal processing capability at the core of some modern POTS line cards. In this case the impedance synthesizer 22 is implemented in the DSP. The DSP device includes A/D and D/A conversion. The transfer function 32 is implemented as a digital filter in the DSP. The particular transfer function 32 that is implemented depends on the required complex impedance at the port P1 as viewed from the customer line 5. By selection of an appropriate transfer function 32 both the resistive and capacitive components required to achieve the required complex impedance at the port P1 can be synthesized.

Block 38 represents further processes that are implemented by the POTS line card 20, including for example gain setting, hybrid balancing, PCM coding and others. These may also be implemented by a DSP forming part of the existing digital signal processing capability at the core of some modern POTS line cards.

In less preferred embodiments, the impedance synthesizer may alternatively be implemented using analog components. In this case the SLIC 21 may be a solid state SLIC or a transformer SLIC.

Figure 3 shows an exemplary LPF 10A and POTS line card 20A according to the present invention. The LPF 10A and POTS line card 20A may be used in a central office splitter of the type shown in Figure 1 with a HPF 3 having a corner frequency of 30KHz (which may be suitable for ADSL, ADSL2 and ADSL2+ applications). The HPF 3 should exhibit a predominantly capacitive load in the VF band up to 4kHz. The nominal value this capacitive load in ITU-T standard G.992.1 is 27 nF.

The LPF 10A has two inductors 11, 12 and capacitors 13, 14, 15. The values of these components are shown in Figure 3 and listed in Table 1. Those skilled in the relevant arts will appreciate that alternative values may be used, depending on the specific design of the filter. As previously described herein, capacitors 13, 14 are optional and serve to increase the rate of roll-off of the LPF 10A by making the LPF 10A an elliptic type filter. The inductor 11 should be dimensioned so as to not saturate during transient signals such as ringing. Also, the inductors 11, 12 should maintain sufficient inductance when carrying the DC to the customer line 5 from the SLIC 21A. The LPF 10A may optionally further include a longitudinal choke 50 and/or an additional capacitor 51, which may have a value of approximately 22nF and which makes the LPF 10A a fourth order filter. The optional additional capacitor 51 therefore enhances the stop band rejection of the LPF 10A. Of course, the capacitor 51 could be provided on the line card 20A (in which case the low pass filter is partly implemented by the line card 20A) or at an intermediate point between the LPF 10A and the line card 20A.

**Table 1**

| **Component** | **Value** |
|---|---|
| Inductors 11, 12 | 4.4 mH (total inductance of two windings) |
| Capacitor 13 | 10 nF |
| Capacitor 14 | 10 nF |
| Capacitor 15 | 47 nF |

The LPF 10A is preferably designed to have a cut-off frequency of approximately 12kHz. A filter with a lower cut-off frequency may be used if required, but such a filter may require larger inductors and/or capacitors and the ability to synthesize the required impedance at the port P1 may be adversely affected. By choosing a relatively high cut-off frequency compared to the audio band (300Hz to 4KHz) improved impedance transparency is achieved in the VF band.

The nominal impedance of the LPF 10A is 600 ohms resistive. The impedance synthesizer in the POTS line card is a digital signal processor (DSP) 22A. The DSP 22A provides the interface between ports P4 and P5. The DSP 22A is used to convert the voice band impedance at the customer line 5, which includes line ports 5a, 5b to a complex impedance. Example complex impedance for Australian market is 220 ohms in series with (820 ohms and 120nF in parallel).

The operation of the POTS line card 20A will now be described. The SLIC 21A is suitably a PEB 4265 SLIC available from Infineon Technologies AG, which can provide a number of functions including:
- injection of DC line feeding;
- ringing generation;
- voice frequency differential driver and receiver; and
- line testing.

The pins labelled TIPX and RINGX are the high voltage (line side) interfaces of the SLIC 21A. The pins labelled TX, RX are the low voltage voice frequency (VF) transmit and received interfaces respectively.

Overcurrent protection is provided by PTC thermisters 23, 24 and buffer resistors 25, 26. Capacitors 27, 28 serve to attenuate common mode RF noise and also contribute to low pass filtering. Advantageously the current limiting provided by the PTC thermisters on the line card 20A also serves to protect the LPF 10A. Component values or identifiers for the passive components shown in the POTS line card 20A are provided in Table 2. These components may have different values or be omitted or substituted in different implementations, for example in implementations using different chipsets.

**Table 2**

| **Component** | **Value/identifier** |
|---|---|
| Thermister 23 | 25 ohms |
| Thermister 24 | 25 ohms |
| Buffer resistor 25 | 30 ohms |
| Buffer resistor 26 | 30 ohms |
| Capacitor 27 | 15 nF |
| Capacitor 28 | 15 nF |

The DSP 22A incorporates A/D and D/A converters. The TX connection 29 and RX connection 30 of the SLIC 21A both carry VF signals to the DSP 22A. A suitable DSP device is a Vinetic from Infineon Technologies AG.

The Vinetic DSP device includes programmable impedance synthesis facilities, described in more detail herein below. In addition, the Vinetic DSP device supports internal ringing generation with low ringing transient production, which further facilitates the use of a relatively low order filter. This may be further enhanced by adopting zero crossing switching for ringing generation.

The impedance synthesis works by introducing a feedback signal onto the TX connection 29 from the RX connection 30. The feedback signal is then transferred to the customer line 5 through the SLIC 21 and the LPF 10A.

The feedback signal is the output of a transfer function 32 (see Figure 2) applied to the signal on the RX connection 30. This transfer function 32 is programmed in the device. As described herein above, the transfer function 32 is determined with the aid of a computer and may be calculated using the software tool Vineticos from Infineon Technologies AG. The total calculation process may include, for example determining the bidirectional transfer function of the circuitry external to the DSP 22A. This may be achieved by inputting the circuit into PSpice, which can output the magnitude and phase of the transfer function over a range of frequencies. The resulting table of values and the target input impedance is then input to the Vineticos software tool, which provides the parameter values for the Vinetic DSP.

Parameter values for the Vinetic DSP to synthesize a complex impedance for the system shown in Figure 3 that results in a target impedance of 220 ohms in series with (820 ohms and 120nF in parallel) are:
AR = 0x0200,0x0804,0x4000,0x16E6,0x1C96,0x0000
AX = 0x0200,0x0C04,0x4000,0x7FFF,0x1A56,0x0A00
FRR = 0x0200,0x1004,0xF2B3,0x016F,0xFEF5,0x0071
FRX = 0x0200,0x1404,0x018C,0x01F8,0xFF6A,0x0047
TH1 = 0x0200,0x2004,0x0800,0x8108,0x8000,0x0800
TH2 = Ox0200,Ox2404,Ox0081,OxFF72,OxFDEB,OxFFA8
TH3 = 0x0200,0x2804,0x06DC,0x21A5,0x0D16,0xF210
IM1_F = 0x0200,0x2C04,0xFF0A,0xFDD6,0xFDEF,0×FF14
IM2_F = 0x0200,0x3004,0x022C,0x8DA9,0x088F,0x0199

The parameter values "IM1_F" and "IM2_F" implement the transfer function 32. The other words are for other Vinetic AC functions: TH=transhybrid balance, FR=frequency response(R=receive, X=transmit), AR/AX = receive transmit gain.

While the preferred embodiment has been described with reference to a particular Infineon chipset, it will be understood that other POTS line cards/chipsets providing impedance synthesis may be substituted in accordance with the present invention. For example Legerity Corporation offers chipsets that also support impedance synthesis.

The present invention may have one or more of the following advantages over conventional complex impedance splitters:
- The real impedance filter requires far fewer components, allowing a compact and low cost solution.
- The filter may be designed so as to be essentially lossless and slopeless in the voice frequency band (300Hz- 4 kHz), due to the availability of a correcting action by the DSP. A conventional complex impedance filter may have up to an approximately 1dB loss and a 1dB slope.
- The combination of the filter and the DSP can yields near perfect return loss and trans-hybrid loss. A conventional splitter and line card combination typically has a poor return loss and a trans-hybrid loss.

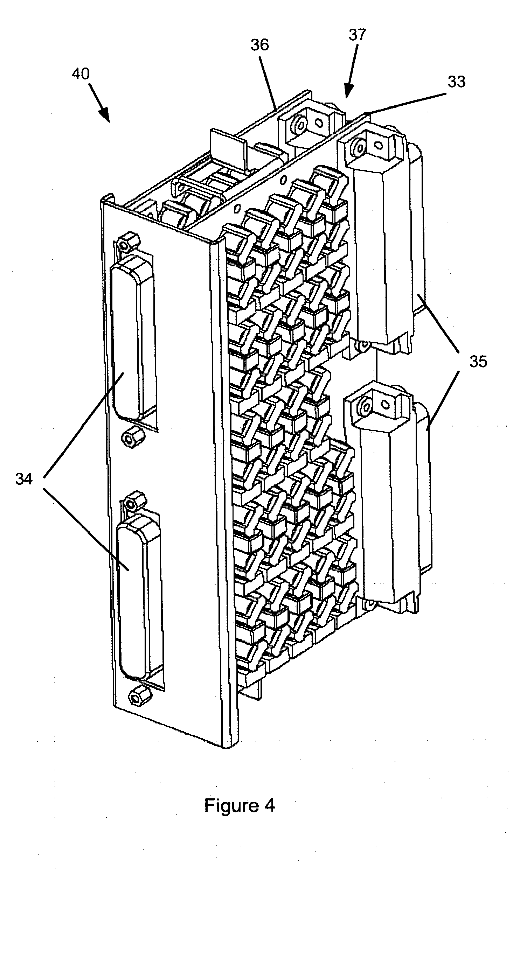

The compact size of the LPF 10, 10A makes it suitable to be placed on a printed circuit board (PCB) that can plug into the POTS line card 20, 20A. Figure 4 shows a printed circuit board assembly (PBA) 40, which is an exemplary forty-eight line LPF 10A implementation of the present invention. The forty-eight LPF's 10A are split between two PCBs 33, 36 with pass through connectors (not shown). The PBA 40 includes two 50 pin CHAMP connectors 34 to connect to the customer line 5 and two 50 pin CHAMP connectors 35 to connect to the POTS line card 20A, each connector carrying signals for twenty-four lines. Two further 50 pin CHAMP connectors 37 (obscured) connect to the DSL LT 4. The high-pass filter 3 is provided elsewhere, typically as part of the DSL LT 4.

Where in the foregoing description reference has been made to specific integers or components having known equivalents, then those equivalents are hereby incorporated herein as if individually set forth.

Those skilled in the relevant arts will appreciate that modifications and additions to the embodiments of the present invention described herein may be made without departing from the scope of the invention as defined in the appended claims.

## Claims

1. A filter device (10, 20; 10A, 20A) for passing telephony signals, the filter device (10, 20; 10A, 20A) comprising an input port (LINE; P1; 5a, 5b) for receiving communications traffic containing telephony signals in a lower frequency band and other signals in a higher frequency band and a low pass filter (10, 10A) coupled to the input port (LINE; P1; 5a, 5b), the filter device (10, 20; 10A, 20A) further comprising means to synthesize a complex impedance (20, 20A) coupled to the low pass filter (10, 10A), said means (20, 20A) creating a complex impedance at the input port (LINE; P1; 5a, 5b), **characterized in, that** the means to synthesize a complex impedance (20, 20A) is implemented by a digital signal processor (22, 22A, DSP) that is configurable to synthesize different complex impedances.

2. The filter device (10, 20; 10A, 20A) of claim 1, **characterized in, that** the low pass filter (10, 10A) is a third order filter.

3. The filter device (10, 20; 10A, 20A) of claim 1 or claim 2, **characterized in, that** the low pass filter (10, 10A) has two series connected double wound inductors and a shunt capacitor between the two inductors.

4. The filter device (10, 20; 10A, 20A) of claim 1, **characterized in, that** the low pass filter (10, 10A) is a fourth order filter having two series connected double wound inductors, a shunt capacitor between the two inductors and a capacitor connected in parallel between the low pass filter (10, 10A) and the means to synthesize a complex impedance.

5. The filter device (10, 20: 10A, 20A) of claim 3 or claim 4, **characterized in, that** the low pass filter (10, 10A) further has a capacitor across each of the two windings of one of the inductors.

6. The filter device (10, 20; 10A, 20A) of any one of claims 1 to 5, **characterized in, that** the means to synthesize a complex impedance (20, 20A) comprises part of a POTS line card.

7. The filter device (10, 20; 10A, 20A) of any one of claims 1 to 6 further comprising a high pass filter that passes signals in said higher frequency band, the high pass filter coupled to the input port (LINE; P1; 5a, 5b) and having an output port for high pass filtered signals received from the input port.

8. The filter device (10, 20; 10A, 20A) of claim 7 when dependent on claim 2, **characterized in, that** the combination of the low pass filter, high pass filter and any components between the low pass filter (10, 10A) and the means to synthesize a complex impedance (20, 20A) implements a fifth order low pass filter.

9. The filter device (10, 20; 10A, 20A) of any one of claims 1 to 8, **characterized in, that** the low pass filter (10, 10A) and the means to synthesize a complex impedance (20, 20A) are at least predominantly implemented as discrete physical devices and the low pass filter (10, 10A) is a pluggable device.

10. The filter device (10, 20; 10A, 20A) of any one of claims 1 to 9, **characterized in, that** the low pass filter (10, 10A) is implemented on a printed circuit board assembly, the printed circuit board assembly further including means for passing signals received at the input port of the filter device to an output port without passing through the low pass filter.

11. A method of producing a filter device (10, 20; 10A, 20A) for passing telephony signals, the method comprising:
providing a means to synthesize a complex impedance (20, 20A) having an input port (LINE; P1; 5a, 5b) and an output port and operable to communicate telephony signals received at its input port (LINE; P1; 5a, 5b) to its output port; and
providing a real impedance low pass filter (10, 10A) having an input port (LINE; P1; 5a, 5b) and an output port, the real impedance low pass filter (10, 10A) having a transfer function between its output port and input port (LINE; P1; 5a, 5b) that provides a non-zero complex impedance at the input port (LINE; P1; 5a, 5b) due when the input port of the means to synthesize a complex impedance (20, 20A) is coupled to the output port of the real impedance low pass filter; and
coupling the input port of the means to synthesize a complex impedance (20, 20A) to the output port of the low pass filter, and
the means to synthesize a complex impedance (20, 20A) being implemented by a digital signal processor (22, 22A, DSP) that is configurable to synthesize different complex impedances.

12. The method of claim 11, **characterized in, that** providing a means to synthesize a complex impedance (20, 20A) comprises providing a device that receives a first signal at its input port, transforms the first signal by a transform function to produce a second signal and synthesizes the complex impedance by providing the second signal as a feedback signal to the input port.

13. The method of claim 11 or claim 12, **characterized in, that** providing a means to synthesize a complex impedance (20, 20A) comprises programming a digital signal processor (22, 22A, DSP) on a POTS line card to synthesize the complex impedance.

## Patentansprüche

1. Filtergerät (10, 20; 10A, 20A) zum Übertragen von Telefonsignalen, wobei das Filtergerät (10, 20; 10A, 20A) einen Eingangsport (LINE; P1; 5a, 5b) für den Empfang von Kommunikationsverkehr mit Telefonsignalen in einem niedrigeren Frequenzband und von anderen Signalen in einem höheren Frequenzband sowie einen an den Eingangsport (LINE; P1; 5a, 5b) gekoppelten Tiefpassfilter (10, 10A) umfasst, wobei das Filtergerät (10, 20; 10A, 20A) weiterhin ein an den Tiefpassfilter (10, 10A) gekoppeltes Mittel (20, 20A) zum Synthetisieren einer komplexen Impedanz umfasst, wobei das besagte Mittel (20, 20A) eine komplexe Impedanz an dem Eingangsport (LINE; P1; 5a, 5b) erzeugt, **dadurch gekennzeichnet, dass** das Mittel (20, 20A) zum Synthetisieren einer komplexen Impedanz durch einen digitalen Signalprozessor (22, 22A, DSP), welcher für das Synthetisieren verschiedener komplexer Impedanzen konfigurierbar ist, implementiert wird.

2. Filtergerät (10, 20; 10A, 20A) nach Anspruch 1, **dadurch gekennzeichnet, dass** der Tiefpassfilter (10, 10A) ein Filter dritter Ordnung ist.

3. Filtergerät (10, 20; 10A, 20A) nach Anspruch 1 oder Anspruch 2, **dadurch gekennzeichnet, dass** der Tiefpassfilter (10, 10A) zwei in Reihe geschaltete doppelt gewickelte Induktoren und einen Nebenschlusskondensator zwischen den beiden Induktoren aufweist.

4. Filtergerät (10, 20; 10A, 20A) nach Anspruch 1, **dadurch gekennzeichnet, dass** der Tiefpassfilter (10, 10A) ein Filter vierter Ordnung mit zwei in Reihe geschalteten doppelt gewickelten Induktoren, einem Nebenschlusskondensator zwischen den beiden Induktoren und einen parallel geschalteten Kondensator zwischen dem Tiefpassfilter (10, 10A) und dem Mittel zum Synthetisieren einer komplexen Impedanz ist.

5. Filtergerät (10, 20; 10A, 20A) nach Anspruch 3 oder Anspruch 4, **dadurch gekennzeichnet, dass** der Tiefpassfilter (10, 10A) weiterhin einen Kondensator quer durch die beiden Wicklungen der Induktoren aufweist.

6. Filtergerät (10, 20; 10A, 20A) nach einem beliebigen der Ansprüche 1 bis 5, **dadurch gekennzeichnet, dass** das Mittel (20, 20A) zum Synthetisieren einer komplexen Impedanz einen Teil einer POTS-Leitungskarte umfasst.

7. Filtergerät (10, 20; 10A, 20A) nach einem beliebigen der Ansprüche 1 bis 6, weiterhin umfassend einen Hochpassfilter, welcher Signale in dem besagten höheren Frequenzband überträgt, wobei der Hochpassfilter an den Eingangsport (LINE; P1; 5a, 5b) gekoppelt ist und einen Ausgangsport für von dem Eingangsport empfangene hochpassgefilterte Signale aufweist.

8. Filtergerät (10, 20; 10A, 20A) nach Anspruch 7, wenn dieser von Anspruch 2 abhängt, **dadurch gekennzeichnet, dass** die Kombination des Tiefpassfilters, des Hochpassfilters und aller Komponenten zwischen dem Tiefpassfilter (10, 10A) und dem Mittel (20, 20A) zum Synthetisieren einer komplexen Impedanz einen Tiefpassfilter fünfter Ordnung implementiert.

9. Filtergerät (10, 20; 10A, 20A) nach einem beliebigen der Ansprüche 1 bis 8, **dadurch gekennzeichnet, dass** der Tiefpassfilter (10, 10A) und das Mittel (20, 20A) zum Synthetisieren einer komplexen Impedanz zumindest vorwiegend als diskrete physische Vorrichtung implementiert werden und der Tiefpassfilter (10, 10A) eine steckbare Vorrichtung ist.

10. Filtergerät (10, 20; 10A, 20A) nach einem beliebigen der Ansprüche 1 bis 9, **dadurch gekennzeichnet, dass** der Tiefpassfilter (10, 10A) auf einer Leiterplattenanordnung implementiert wird, wobei die Leiterplattenanordnung weiterhin Mittel zum Übertragen von an dem Eingangsport des Filtergeräts empfangenen Signalen, ohne dass diese durch den Tiefpassfilter laufen, umfasst.

11. Verfahren zur Herstellung eines Filtergeräts (10, 20; 10A, 20A) zum Übertragen von Telefonsignalen, wobei das Verfahren umfasst:
Bereitstellen eines Mittels (20, 20A) zum Synthetisieren einer komplexen Impedanz mit einem Eingangsport (LINE; P1; 5a, 5b) und einem Ausgangsport für die Übermittlung von an seinem Eingangsport (LINE; P1; 5a, 5b) empfangenen Telefonsignalen an seinen Ausgangsport; und
Bereitstellen eines Tiefpassfilters (10, 10A) mit reeller Impedanz mit einem Eingangsport (LINE; P1; 5a, 5b) und einem Ausgangsport, wobei der Tiefpassfilter (10, 10A) mit reeller Impedanz eine Übertragungsfunktion zwischen seinem Ausgangsport und seinem Eingangsport (LINE; P1; 5a, 5b) aufweist, welche **dadurch**, dass der Eingangsport des Mittels (20, 20A) zum Synthetisieren einer komplexen Impedanz an den Ausgangsport des Tiefpassfilters mit reeller Impedanz gekoppelt ist, eine komplexe nicht-Null-Impedanz an dem Eingangsport (LINE; P1; 5a, 5b) bereitstellt; und
Koppeln des Eingangsports des Mittels (20, 20A) zum Synthetisieren einer komplexen Impedanz an den Ausgangsport des Tiefpassfilters, und
wobei das Mittel (20, 20A) zum Synthetisieren einer komplexen Impedanz durch einen digitalen Signalprozessor (22, 22A, DSP), welcher für das Synthetisieren verschiedener komplexer Impedanzen konfigurierbar ist, implementiert wird.

12. Verfahren nach Anspruch 11, **dadurch gekennzeichnet, dass** das Bereitstellen eines Mittels (20, 20A) zum Synthetisieren einer komplexen Impedanz das Bereitstellen einer Vorrichtung, welche ein erstes Signal an ihrem Eingangsport empfängt, das erste Signal durch eine Transformationsfunktion transformiert, um ein zweites Signal zu erzeugen, und die komplexe Impedanz durch Bereitstellen des zweiten Signals als ein Rückkopplungssignal an den Eingangsport synthetisiert, umfasst

13. Verfahren nach Anspruch 11 oder Anspruch 12, **dadurch gekennzeichnet, dass** das Bereitstellen eines Mittels (20, 20A) zum Synthetisieren einer komplexen Impedanz das Programmieren eines digitalen Signalprozessors (22, 22A, DSP) auf einer POTS-Leitungskarte umfasst, um die komplexe Impedanz zu synthetisieren.

## Revendications

1. Dispositif de filtrage (10, 20 ; 10A, 20A) pour faire passer des signaux de téléphonie, le dispositif de filtrage (10, 20 ; 10A, 20A) comprenant un port d'entrée (LIGNE ; P1 ; 5a, 5b) pour recevoir un trafic de communications contenant des signaux de téléphonie dans une bande de fréquence inférieure et d'autres signaux dans une bande de fréquence supérieure et un filtre passe-bas (10, 10A) couplé au port d'entrée (LIGNE ; P1 ; 5a, 5b), le dispositif de filtrage (10, 20 ; 10A, 20A) comprenant en outre un moyen pour synthétiser une impédance complexe (20, 20A) couplé au filtre passe-bas (10, 10A), ledit moyen (20, 20A) créant une impédance complexe au niveau du port d'entrée (LIGNE ; P1 ; 5a, 5b), **caractérisé en ce que** le moyen pour synthétiser une impédance complexe (20, 20A) est mis en oeuvre par un processeur de signal numérique (22, 22A, DSP) qui peut être configuré pour synthétiser différentes impédances complexes.

2. Dispositif de filtrage (10, 20 ; 10A, 20A) selon la revendication 1, **caractérisé en ce que** le filtre passe-bas (10, 10A) est un filtre du troisième ordre.

3. Dispositif de filtrage (10, 20 ; 10A, 20A) selon la revendication 1 ou la revendication 2, **caractérisé en ce que** le filtre passe-bas (10, 10A) possède deux inducteurs à deux enroulements connectés en série et un condensateur shunt entre les deux inducteurs.

4. Dispositif de filtrage (10, 20 ; 10A, 20A) selon la revendication 1, **caractérisé en ce que** le filtre passe-bas (10, 10A) est un filtre de quatrième ordre possédant deux inducteurs à deux enroulements connectés en série, un condensateur shunt entre les deux inducteurs et un condensateur connecté en parallèle entre le filtre passe-bas (10, 10A) et le moyen pour synthétiser une impédance complexe.

5. Dispositif de filtrage (10, 20 ; 10A, 20A) selon la revendication 3 ou la revendication 4, **caractérisé en ce que** le filtre passe-bas (10, 10A) possède en outre un condensateur à travers chacun des deux enroulements d'un des inducteurs.

6. Dispositif de filtrage (10, 20 ; 10A, 20A) selon l'une quelconque des revendications 1 à 5, **caractérisé en ce que** le moyen pour synthétiser une impédance complexe (20, 20A) comprend une partie d'une carte de ligne POTS.

7. Dispositif de filtrage (10, 20; 10A, 20A) selon l'une quelconque des revendications 1 à 6 comprenant en outre un filtre passe-haut qui fait passer des signaux dans ladite bande de fréquence supérieure, le filtre passe-haut étant couplé au port d'entrée (LIGNE ; P1 ; 5a, 5b) et possédant un port de sortie pour les signaux filtrés passe-haut provenant du port d'entrée.

8. Dispositif de filtrage (10, 20 ; 10A, 20A) selon la revendication 7, lorsqu'elle dépend de la revendication 2, **caractérisé en ce que** l'association du filtre passe-bas, du filtre passe-haut et de tout élément entre le filtre passe-bas (10, 10A) et le moyen pour synthétiser une impédance complexe (20, 20A), met en oeuvre un filtre passe-bas de cinquième ordre.

9. Dispositif de filtrage (10, 20 ; 10A, 20A) selon l'une quelconque des revendications 1 à 8, **caractérisé en ce que** le filtre passe-bas (10, 10A) et le moyen pour synthétiser une impédance complexe (20, 20A) sont au moins principalement mis en oeuvre comme dispositifs physiques discrets et le filtre passe-bas (10, 10A) est un dispositif qui peut être branché.

10. Dispositif de filtrage (10, 20; 10A, 20A) selon l'une quelconque des revendications 1 à 9, **caractérisé en ce que** le filtre passe-bas (10, 10A) est mis en oeuvre sur un assemblage de carte de circuit imprimé, l'assemblage de carte de circuit imprimé comprenant en outre un moyen pour faire passer des signaux reçus au niveau du port d'entrée du dispositif de filtrage vers un port de sortie sans traverser le filtre passe-bas.

11. Procédé de production d'un dispositif de filtrage (10, 20 ; 10A, 20A) pour faire passer des signaux de téléphonie, le procédé comprenant les étapes suivantes :
fournir un moyen pour synthétiser une impédance complexe (20, 20A) possédant un port d'entrée (LIGNE ; P1 ; 5a, 5b) et un port de sortie et permettant de communiquer des signaux de téléphonie reçus au niveau de son port d'entrée (LIGNE ; P1 ; 5a, 5b) vers son port de sortie ; et
fournir un filtre passe-bas d'impédance réelle (10, 10A) possédant un port d'entrée (LIGNE ; P1 ; 5a, 5b) et un port de sortie, le filtre passe-bas d'impédance réelle (10, 10A) ayant une fonction de transfert entre son port de sortie et son port d'entrée (LIGNE ; P1 ; 5a, 5b) qui fournit une impédance complexe non-nulle au niveau du port d'entrée (LIGNE ; P1 ; 5a, 5b) lorsque le port d'entrée du moyen pour synthétiser une impédance complexe (20, 20A) est couplé au port de sortie du filtre passe-bas d'impédance réelle ; et
coupler le port d'entrée du moyen pour synthétiser une impédance complexe (20, 20A) au port de sortie du filtre passe-bas, et
le moyen pour synthétiser une impédance complexe (20, 20A) étant mis en oeuvre par un processeur de signal numérique (22, 22A, DSP) qui peut être configuré pour synthétiser différentes impédances complexes.

12. Procédé selon la revendication 11, **caractérisé en ce que** la fourniture d'un moyen pour synthétiser une impédance complexe (20, 20A) comprend la fourniture d'un dispositif qui reçoit un premier signal au niveau de son port d'entrée, transforme le premier signal au moyen d'une fonction de transformation afin de produire un deuxième signal et synthétise l'impédance complexe en fournissant le deuxième signal comme signal de rétroaction au port d'entrée.

13. Procédé selon la revendication 11 ou la revendication 12, **caractérisé en ce que** la fourniture d'un moyen pour synthétiser une impédance complexe (20, 20A) comprend la programmation d'un processeur de signal numérique (22, 22A, DSP) sur une carte de ligne POTS pour synthétiser l'impédance complexe.
